# DEMANDE DE BREVET EUROPEEN

(11) **EP 0 740 148 A1**
(43) Date de publication de la demande: **30.10.1996**
(21) Numéro de dépôt: 96400636.5
(22) Date de dépôt: 26.03.1996
(51) Int. Cl.: G01N 23/225, B07C 5/34

(54) **Procédé et dispositif de vérification d'un élément isolant**

(30) Priorité: 30.03.1995 FR 9503771
(71) Demandeur: ALCATEL CABLE, F-92100 Clichy (FR); COMMISSARIAT A L'ENERGIE ATOMIQUE, 75752 Paris Cédex 15 (FR)
(72) Inventeur: Janah, Hakim, 62231 Sangatte (FR); Acroute, Daniel, 62730 March (FR); Mirebeau, Pierre, 91140 Villebon s/Yvette (FR); Le Gressus, Claude, c/o Commissariat à l'Energie, 75752 Paris Cedex 15 (FR); Faure, Claude, Commissariat à l'Energie Atomique, 75752 Paris Cedex 15 (FR)
(74) Mandataire: Buffiere, Michelle

(57) **Abrégé**

La demende décrit un procédé de vérification de la conformité d'un élément isolant donné (1) avec un élément isolant de référence. Le procédé comprend les étapes de:
- émission (20) d'un faisceau primaire d'électrons (30) sur ledit élément isolant donné (1),
- réception (21) d'un faisceau secondaire d'électrons (31) qui est renvoyé par ledit élément isolant donné (1) en réponse à l'émission du faisceau primaire d'électrons, et
- comparaison (4) d'une courbe temporelle d'intensité électrique du faisceau secondaire reçu (31) avec une courbe temporelle d'intensité électrique de référence pour établir s'il y a conformité ou défaut de conformité entre ledit élément isolant donné (1) et un élément isolant de référence. Application dans la détection des contaminations et défauts dans les granulés de matériau isolant qui sont utilisés pour la fabrication de gaine de câble d'énergie.

## Description

La présente invention concerne de manière générale des matériaux isolants, et plus particulièrement des dispositif et procédé destinés à vérifier la conformité de tels matériaux avec un matériau de référence en vue de la détection de défauts ou contaminations de ces matériaux. L'invention concerne en outre un procédé pour trier des granulés de matériau isolant, par exemple destinés à la fabrication de gaine de câble d'énergie.

La détection des défauts et/ou contaminations des matériaux isolants est de première importance par exemple pour des matériaux isolants synthétiques qui sont destinés à être utilisés pour la fabrication des gaines de câble d'énergie à haute ou très haute tension. Les tensions très élevées véhiculées à travers ces câbles impliquent que des contrôles de qualité très poussés soient prévus pour garantir la qualité des matériaux isolants destinés à la fabrication des gaines isolantes du câble. Un défaut, même ponctuel, formé dans la gaine isolante peut conduire à un claquage du matériau isolant à cet endroit, et donc à une détérioration irréversible du câble.

En pratique, le matériau isolant synthétique destiné à la fabrication d'une gaine isolante de câble est livré sous la forme de granulés de matériau isolant, chacun d'un très faible volume de l'ordre de la dizaine de mm³. Ces granulés sont destinés à être chauffés pour une opération d'extrusion. Les défauts et/ou contaminations des granulés apparaissent sous différentes formes. Peuvent être distingués les contaminations surfaciques, les contaminations volumiques et les défauts volumiques généralisés.

Les contaminations surfaciques résultent des opérations de découpage du matériau isolant pour produire des granulés et de transport de ces granulés. Elles se présentent sous la forme de fines mécaniques, ou poussières de polymère, contaminants minéraux et exsudation de constituants. Les fines mécaniques proviennent de l'opération de découpage de laquelle résulte une poussière de matériau isolant qui vient se déposer sur les granulés résultant du découpage. Les contaminants minéraux ont pour origine la mise en contact des granulés avec des éléments extérieurs, tels que containers de transport plastiques ou métalliques, qui entraîne le dépôt ponctuel de micro-éléments plastiques ou métalliques sur les granulés.

Les contaminations volumiques résultent de l'opération de fabrication du matériau isolant. Elles consistent en des corps minéraux, conducteurs ou isolants, qui s'intègrent ponctuellement dans le volume d'un granulé. Ces corps minéraux sont présents par exemple dans le four dans lequel est produit l'isolant, dans les additifs nécessaires à sa fabrication, ou dans l'environnement de fabrication. Il peut également apparaître une zone oxydée suite à un contact prolongé avec de l'oxygène, à une température élevée.

Les défauts volumiques se présentent pour leur part sous la forme de défauts de structure chimique généralisés du granulé. Il ont pour origine par exemple un problème de fonctionnement du réacteur de fabrication de l'isolant.

De telles contaminations et de tels défauts n'affectent en pratique qu'un pourcentage relativement faible des granulés. Néanmoins, il est indispensable de prévoir un procédé visant à détecter de telles imperfections lorsque cela est possible, et à rejeter le granulé imparfait lorsque l'imperfection ne peut être supprimée.

Diverses techniques sont connues selon la technique antérieure pour la suppression des contaminations surfaciques sur les granulés. A titre d'exemple, il peut être cité les techniques de lavage dans un solvant tel que méthanol. La suppression de ces contaminations surfaciques ne pose pas de problème particulier, et est à l'origine de techniques bien maîtrisées dans l'art antérieur.

Les suppressions des contaminations et défauts volumiques utilisent pour leur part des techniques optiques qui ne donnent pas entière satisfaction. Ces techniques ont pour finalité de rejeter les granulés qui présentent des contamination et/ou défaut volumiques, sachant que ces imperfections volumiques des granulés ne peuvent être corrigées. Elles consistent de manière schématique à projeter un faisceau lumineux sur chaque granulé en vue d'obtenir une image de chaque granulé. Un traitement d'analyse d'image est ensuite mis en oeuvre pour détecter une différence de couleur entre la couleur d'une zone au moins ponctuelle du granulé considéré et une couleur de référence. Cette différence de couleur est mise à profit pour établir que le granulé présente une imperfection et qu'il convient donc de le rejeter. Cette technique optique présente néanmoins l'inconvénient de n'avoir qu'une efficacité réduite dans le cas des contaminations volumiques, et faible en ce qui concerne les défauts volumiques généralisés. Cette technique étant fondée sur une détection des imperfections des granulés en fonction d'une analyse chromatique, sa limitation provient du fait même que les contaminations ou défauts volumiques ne conduisent pas nécessairement à une différenciation chromatique, du moins détectable par un procédé optique.

Un premier objectif de l'invention est de fournir des procédé et dispositif de vérification de la conformité d'un élément isolant donné avec un élément isolant de référence, en vue de détecter efficacement des défauts et contaminations volumiques dans l'élément isolant donné, tel que granulé.

Un second objectif de l'invention est de fournir un procédé de tri de granulés de matériau isolant.

Un dernier objectif de l'invention et de fournir un câble d'énergie fabriqué à partir de granulés de matériau isolants triés selon le procédé précité.

A cette fin, un procédé de vérification de la conformité d'un élément isolant donné avec un élément isolant de référence, est caractérisé selon l'invention en ce qu'il comprend les étapes de:
- émission d'un faisceau primaire d'électrons sur l'élément isolant donné,
- réception d'un faisceau secondaire d'électrons qui est renvoyé par l'élément isolant donné en réponse à l'émission du faisceau primaire d'électrons, et
- comparaison d'une courbe temporelle d'intensité électrique du faisceau secondaire reçu avec une courbe temporelle d'intensité électrique de référence pour établir s'il y a conformité ou défaut de conformité entre l'élément isolant donné et un élément isolant de référence.

Le dispositif associé à ce procédé comprend :
- des moyens pour émettre un faisceau primaire d'électrons sur un élément isolant donné;
- des moyens pour recevoir un faisceau secondaire d'électrons renvoyé par l'élément isolant donné en réponse à l'émission du faisceau primaire d'électrons; et
- des moyens pour comparer une courbe temporelle d'intensité électrique du faisceau secondaire reçu et une courbe temporelle d'intensité électrique de référence mémorisée.

L'invention fournit également un procédé pour trier des granulés de matériau isolant. Le procédé est caractérisé en ce qu'il comprend les étapes de :
- émission d'un faisceau primaire d'électrons sur chacun desdits granulés à trier,
- réception d'un faisceau secondaire d'électrons qui est renvoyé par le granulé en réponse à l'émission du faisceau primaire d'électrons,
- comparaison d'une courbe temporelle d'intensité électrique du faisceau secondaire reçu avec une courbe temporelle d'intensité électrique de référence associée à un granulé de référence, et
- éjection du granulé en réponse à un résultat de comparaison négatif entre la courbe temporelle d'intensité électrique du faisceau secondaire reçu et la courbe temporelle d'intensité électrique de référence associée au granulé de référence.

De préférence, la courbe temporelle d'intensité électrique de référence est une courbe gabarit établie à partir d'une courbe temporelle d'intensité électrique d'un faisceau secondaire d'électrons qui est renvoyé par le granulé de référence en réponse à l'émission d'un faisceau primaire d'électrons sur ce granulé de référence, et l'étape de comparaison consiste en une vérification de l'inscription dans la courbe gabarit de ladite courbe temporelle d'intensité électrique du faisceau secondaire reçu .

Avantageusement, la fonction temporelle d'intensité électrique du faisceau primaire d'électrons est identique, à un facteur de proportionnalité près, à une fonction temporelle d'une tension électrique à simuler sur le granulé.

Afin d'assurer une parfaite propagation du faisceau primaire d'électrons, l'étape d'émission du faisceau primaire d'électrons sur le granulé est précédée par une étape de mise sous vide d'une chambre contenant le granulé.

Typiquement, il est prévu un défilement continu des granulés à trier et l'émission du faisceau primaire d'électrons sur un granulé est activée en réponse à la détection, par reconnaissance de forme, du passage de ce granulé.

Les granulés sont avantageusement préalablement lavés en vue de supprimer des contaminations surfaciques.

Un câble d'énergie fabriqué à partir de granulés triés selon le procédé de l'invention présente une bien meilleure qualité.

D'autres caractéristiques et avantages de la présente invention apparaîtront plus clairement à la lecture de la description suivante, en référence aux dessins annexés correspondants, dans lesquels :
- la figure 1 montre une courbe temporelle d'intensité électrique d'un faisceau secondaire d'électrons qui est renvoyé par un élément isolant de référence en réponse à l'émission sur cet élément isolant d'un faisceau primaire d'électrons;
- la figure 2 est un bloc diagramme schématique d'un dispositif selon l'invention de vérification de la conformité d'un élément isolant donné à un élément isolant de référence; et
- la figure 3 montre un système de tri de granulés de matériau isolant selon l'invention.

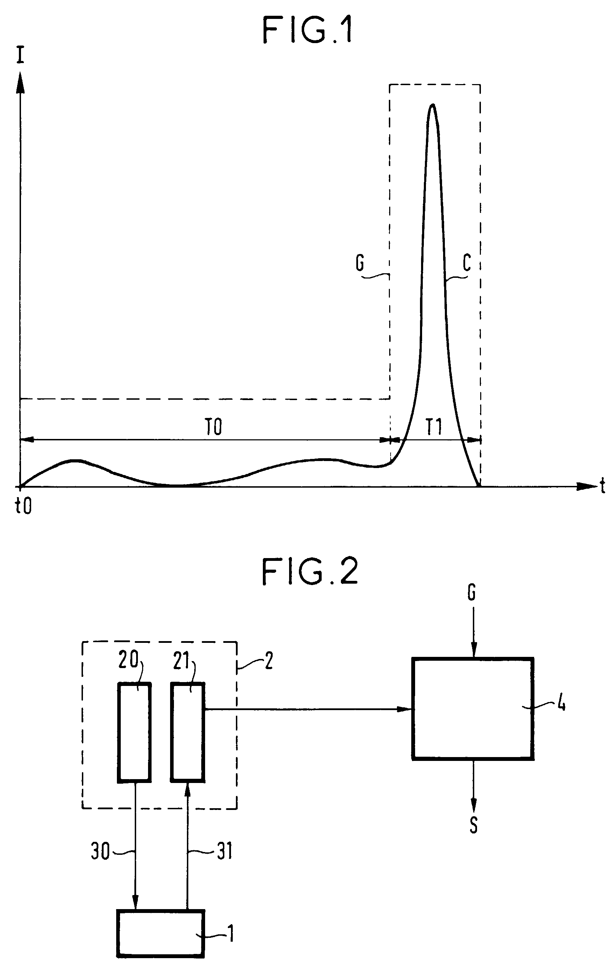

En référence à la figure 1, l'invention se base sur une propriété remarquable que possède la courbe temporelle d'intensité électrique C d'un faisceau secondaire d'électrons qui est renvoyé par un élément isolant de référence en réponse à l'émission sur cet élément isolant d'un faisceau primaire d'électrons. L'élément isolant de référence est un élément en matériau isolant qui est sélectionné pour sa pureté, ou qualité, en ce qu'il n'est sujet à aucune contamination, surfacique ou volumique, et à aucun défaut. Cet élément isolant est bombardé par un faisceau d'électrons, dit primaire, défini par une fonction d'intensité en fonction du temps prédéterminée. Il est à noter que cette fonction doit être particulière, notamment en terme d'intensité, pour obtenir la courbe C très spécifique du type montrée à la figure 1. L'émission du faisceau primaire d'électrons sur l'élément isolant débute à compter d'un instant t0, pour une durée (T0 + T1). Pendant une durée T0 à compter de l'instant t0, l'intensité électrique I du faisceau d'électrons, dit secondaire, renvoyé par l'élément isolant est quasi-nulle. Puis subitement, pendant une durée T1 succédant à la durée T0, l'intensité électrique du faisceau secondaire d'électrons renvoyé par l'élément isolant prend une valeur très élevée avant de se rétablir de nouveau à un niveau quasi-nûl. Tout se passe donc comme si l'élément isolant accumule des charges électriques pendant une durée donnée T0 puis renvoie subitement ces charges électriques accumulées pendant une durée T1. Cette courbe temporelle d'intensité électrique C d'un faisceau secondaire d'électrons renvoyé par un élément isolant est caractéristique du fait que cet élément isolant est parfait. Les inventeurs ont expérimenté deux variantes de mise en oeuvre de l'invention, respectivement en mode focalisé et non focalisé, donnant entière satisfaction. Dans le mode focalisé selon lequel le faisceau primaire d'électrons bombarde l'élément isolant de manière très ponctuelle, il est prévu une puissance de 30 keV, une intensité de faisceau primaire d'électrons de 500 pA, et un bombardement pendant une durée (T0 + T1) = 1 seconde. Dans le mode non focalisé selon lequel le faisceau primaire d'électrons bombarde l'élément isolant sur une surface plus étendue, il est prévu une puissance de 30 keV, une intensité de faisceau primaire d'électrons de 250 pA, et un bombardement pendant une durée (T0 + T1) = 10 secondes. Bien entendu, ces valeurs d'expérimentation peuvent être modifiées sur la base d'essais préalables notamment en vue de diminuer la durée (T0 + T1) par une augmentation de l'intensité du faisceau primaire d'électrons. Par ailleurs, l'intensité de la fonction temporelle d'intensité du faisceau primaire d'électrons peut ne pas être constante dans le temps pour toute la durée (T0 + T1), et par exemple être une fonction linéaire du temps. En outre, les valeurs d'expérimentation précitées ont été obtenues pour un matériau PEBD. Il convient donc par expérimentation de vérifier la validité de ces valeurs pour d'autres types de matériau. Il est à noter que bien que les termes de "faisceau secondaire d'électrons" soient utilisés, les électrons renvoyés par l'élément isolant ne sont pas sous la forme d'un rayon concentré, mais sont renvoyés dans l'espace par l'élément isolant de manière sensiblement anarchique. Un tel type de courbe n'est pas obtenu notamment dans le cas où des contaminations ou défauts volumiques affectent l'élément isolant. De cette courbe C, peut être déduite une courbe gabarit G constituant une enveloppe grossière de ladite courbe C. Pour vérifier si des contaminations ou défauts volumiques sont à attribuer à un élément isolant donné, il est proposé selon l'invention de vérifier s'il y a conformité de cet élément isolant donné avec un élément isolant de référence. Pour cela, il est proposé d'émettre un faisceau primaire d'électrons sur l'élément isolant donné puis de recevoir en retour un faisceau secondaire d'électrons qui est renvoyé par l'élément isolant donné en réponse à cette émission. Ensuite, il est opérée une comparaison de la courbe temporelle d'intensité électrique du faisceau secondaire reçu avec une courbe temporelle d'intensité électrique de référence, obtenue comme décrit ci-dessus, en vue d'établir la conformité ou le défaut de conformité entre l'élément isolant donné et l'élément élément isolant de référence. La courbe temporelle d'intensité électrique de référence est par exemple une courbe gabarit G du type montrée dans la figure 1, établie à partir d'une courbe temporelle d'intensité électrique d'un faisceau secondaire d'électrons qui est renvoyé par l'élément isolant de référence en réponse à l'émission d'un faisceau primaire d'électrons sur cet élément isolant. La comparaison entre courbe temporelle d'intensité électrique reçue et courbe de référence consiste alors par exemple à vérifier s'il y a inscription dans ladite courbe gabarit de ladite courbe temporelle d'intensité électrique dudit faisceau secondaire reçu. Dans l'affirmative, il peut être déduit que l'élément isolant n'est pas contaminé, et dans le cas contraire, il doit être conclu que l'élément isolant est contaminé.

Dans le bloc diagramme schématique de la figure 2, il est montré un dispositif destiné à vérifier la conformité d'un élément isolant donné 1 avec un élément isolant de référence. Le dispositif comprend un ensemble d'émission/réception d'électrons 2 et une unité de comparaison 4. L'ensemble 2 comprend une unité 20 pour émettre un faisceau primaire d'électrons 30 et une unité 21 pour recevoir un faisceau secondaire d'électrons 31. Le faisceau primaire d'électrons 30 est émis à destination de l'élément isolant à caractériser 1. En réponse, un faisceau secondaire d'électrons 31 est renvoyé par l'élément isolant 1 pour être reçu par l'unité 21. A partir de ce faisceau secondaire d'électrons, peut être établie une courbe temporelle d'intensité électrique du faisceau secondaire reçu. Cette courbe temporelle d'intensité électrique du faisceau secondaire reçu est comparé dans l'unité 4 avec une courbe temporelle d'intensité électrique de référence G mémorisée pour établir la conformité ou le défaut de conformité entre l'élément isolant donné 1 et l'élément isolant de référence.

Comme signalé précédemment, la courbe temporelle d'intensité électrique de référence est par exemple une courbe gabarit G du type montrée dans la figure 1, établie à partir d'une courbe temporelle d'intensité électrique d'un faisceau secondaire d'électrons qui est renvoyé par l'élément isolant de référence en réponse à l'émission d'un faisceau primaire d'électrons sur cet élément isolant. La comparaison entre courbe temporelle d'intensité électrique reçue et courbe de référence consiste alors à vérifier si la courbe temporelle C d'intensité électrique du faisceau secondaire reçu s'inscrit dans la courbe gabarit G. Dans l'affirmative, il peut être déduit que l'élément isolant n'est pas contaminé, et dans le cas contraire, il doit être conclu que l'élément isolant est contaminé. En pratique, la comparaison par vérification d'inscription effectuée dans l'unité 4 consiste en des comparaisons entre des échantillons de niveau d'intensité I respectifs régulièrement prélevés des courbe obtenue et courbe de référence G. Plus précisement, il est vérifié si chaque niveau d'intensité électrique de la courbe obtenue est inférieur à un niveau d'intensité correspondant de la courbe gabarit G. La comparaison de deux niveaux respectifs des courbe obtenue et courbe gabarit G s'effectue pour un même décalage temporel par rapport à un instant de référence t0 (figure 1) de début d'émission de faisceau primaire d'électrons.

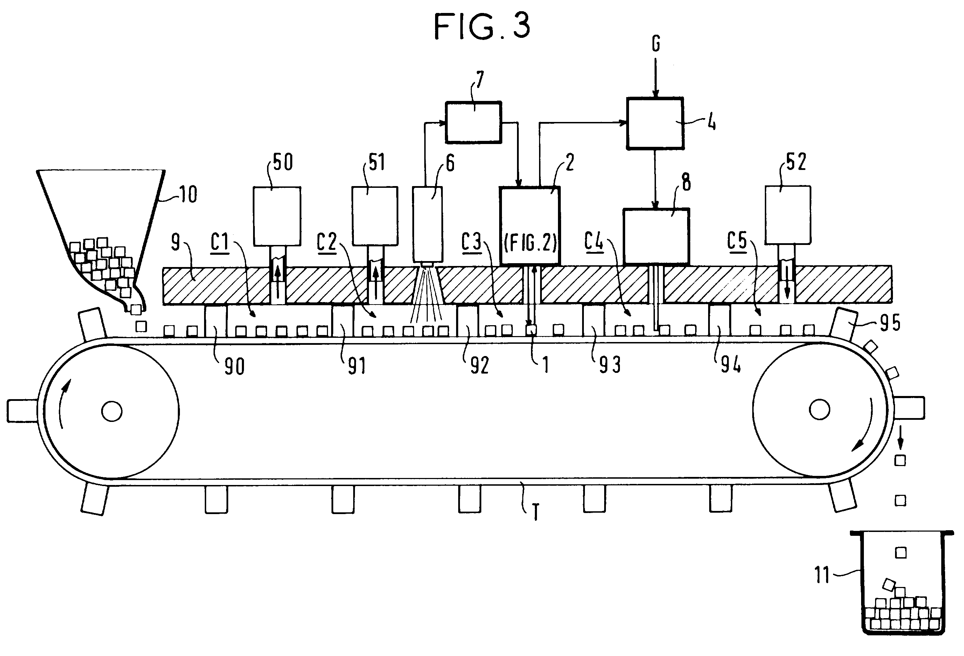

En référence à la figure 3, il va maintenant être divulgué un système pour trier des granulés de matériau isolant, notamment destinés à la fabrication de gaines pour câbles d'énergie.

Le système comprend principalement un tapis roulant T sur lequel sont montés à intervalles réguliers des pistons 90, 91, 92, 93, 94 et 95 possédant un mouvement d'extension transversal à la surface du tapis, une paroi d'isolation 9, un dispositif d'alimentation en granulés 10, deux pompes à vide 50 et 51, une unité optique 6, une unité de reconnaissance de forme 7, un ensemble d'émission/réception de faisceau d'électrons 2, une unité de comparaison 4, un dispositif d'éjection de granulés 8, un dispositif de mise sous pression atmosphérique 52 et un dispositif de stockage de granulés triés 11. Le tapis roulant T défile à une vitesse constante et définit un plan de travail horizontal déroulant dont une portion principale est en regard avec la paroi d'isolation fixe 9. Une herméticité latérale parfaite entre la paroi d'isolation fixe 9 et la surface de travail du tapis roulant est obtenue grâce à des dispositifs de joint latéraux (non représentés dans la coupe longitudinale montrée). Une herméticité transversale, assurée par les pistons 90-95 venant en butée sur la surface inférieure de la paroi d'isolation 9, combinée avec l'herméticité latérale précitée, permet de définir des chambres cloisonnées hermétiques C1, C2, C3, C4 et C5. Chacune des chambres cloisonnées hermétiques est délimitée par la surface du tapis, la surface inférieure de la paroi d'isolation 9, les dispositifs de joint latéraux et deux pistons. Dans la représentation de la figure 3, la chambre C1 est délimitée transversalement par les deux pistons 90 et 91, la chambre C2 par les deux pistons 91 et 92, la chambre C3 par les pistons 92 et 93, etc..., et la chambre C5 par les deux pistons 94 et 95. Au fur et à mesure du défilement du tapis roulant, une chambre donnée est soumise tour à tour aux opérations successives principales suivantes:
a1) - première mise sous vide,
a2) - seconde mise sous vide et détection optique des granulés qu'elle inclut,
a3) - vérification de conformité des granulés par faisceau d'électrons, et
a4) - éjection des granulés non conformes.

Ces opérations successives vont maintenant être décrites avec plus de détails. Une portion complémentaire à la portion principale du plan de travail horizontal n'est pas en regard avec la paroi d'isolation 9 et reçoit, alors que la tapis défile, des granulés de matériau isolant à trier en provenance du dispositif d'alimentation 10. Ces granulés peuvent préalablement avoir été lavés en vue de supprimer des contaminations surfaciques. Ils sont par exemple lavés par ultrason dans un milieu liquide. Chaque granulé ainsi lavé est déversé sur le tapis pour, en résultat du défilement du tapis, être enfermé dans une chambre hermétique cloisonnée qui est en déplacement relatif par rapport à la paroi d'isolation 9. Il est alors successivement soumis notamment aux opérations al) à a4) précitées. Chaque granulé déversé sur la tapis se trouve enfermé dans une chambre hermétique en résultat de la mise en butée des deux pistons délimitant la chambre sur la surface inférieure de la paroi d'isolation 9 obtenue par défilement du tapis. Cette chambre hermétique est d'abord mise sous vide à une première pression donnée par la pompe à vide 50. Cette pompe à vide 50 est reliée à une ouverture formée dans la paroi d'isolation 9. Puis, toujours par défilement du tapis, cette chambre hermétique est mise sous vide à une seconde pression inférieure à ladite première pression. Deux opérations de mise sous vide sont utilisées ici bien qu'elles puissent être combinées en une seule opération.

Ensuite, un dispositif optique 6 produit une image du contenu de la chambre et en particulier des granulés qui y sont inclus et qui défilent suivant un chemin déterminé dans la chambre, par exemple dans un canal. Le dispositif optique est plaqué de manière hermétique sur la surface supérieure de la paroi d'isolation 6, un trou étant prévu dans la paroi 6 pour permettre une prise d'image. L'image produite par le dispositif optique 6 est transmise à l'unité de reconnaissance de forme 7. Cette unité de reconnaissance a pour fonction de détecter le passage d'un granulé dans le champ de vision du dispositif optique 6. Dès lors qu'un tel granulé est détecté, l'unité de reconnaissance de forme 7 active l'ensemble d'émission/réception de faisceau d'électrons 2, du type montré à la figure 2, qui est placé en aval suivant le défilement des granulés sur le tapis. En réponse à cette activation de l'ensemble 2 et grâce à un fin réglage de synchronisation, l'unité 20 (figure 2) émet un faisceau primaire d'électrons à un instant t0 qui coïncide avec l'instant pour lequel le granulé considéré, détecté par l'unité 7, est positionné dans le champ dudit faisceau primaire d'électrons émis par l'unité 20. A ce même instant t0, est initialisée l'acquisition par l'unité 21 (figure 2) de la courbe temporelle d'intensité électrique du faisceau secondaire qui est renvoyé par le granulés en réponse à l'émission du faisceau primaire d'électrons. Pour cette opération, la chambre dans laquelle se trouve le granulé est toujours maintenue sous vide grâce à son herméticité, l'ensemble 2 étant plaqué de manière hermétique sur la surface supérieure de la paroi d'isolation 6 et les faisceaux primaire et secondaire passant à travers une ouverture formée dans la paroi d'isolation 6. La courbe temporelle d'intensité électrique du faisceau secondaire qui est acquise pendant la durée (T0 + T1) est transmise sous forme numérique à l'unité de comparaison 4. Cette unité 4 a pour fonction de comparer la courbe temporelle d'intensité électrique du faisceau secondaire reçu et une courbe temporelle d'intensité électrique de référence mémorisée G pour établir s'il y a conformité ou défaut de conformité entre le granulé considéré et un granulé de référence. Dans le cas d'un défaut de conformité, le granulé est éjecté par le dispositif d'éjection 8 dans un bac de réception de granulé imparfait qui est sous vide (non représenté). Comme décrit précédemment, l'étape de comparaison consiste en une vérification de l'inscription dans une courbe gabarit G (figure 2) de la courbe temporelle d'intensité électrique du faisceau secondaire reçu. Pour vérifier la conformité, il est donc vérifié si chaque niveau d'intensité électrique du faisceau secondaire reçu est inférieur à un niveau d'intensité correspondant de la courbe gabarit G. La comparaison de deux niveaux respectifs des faisceau secondaire reçu et courbe gabarit G s'effectue pour un même décalage temporel par rapport à un instant de référence t0 (figure 1) de début d'émission de faisceau primaire d'électrons. Ensuite, par défilement du tapis, la chambre est remise à la pression atmosphérique par le dispositif 52. A une extrémité d'enroulement du tapis roulant, les granulés restants, c'est à dire ceux qui n'ont pas été éjectés, sont déversés dans le dispositif de stockage de granulés triés 11. Ces granulés triés ne présentent ni contamination, ni défaut volumiques. Ils sont donc particulièrement appropriés pour la fabrication de câble d'énergie, notamment à haute ou très haute tension.

De manière avantageuse, la fonction temporelle d'intensité électrique du faisceau primaire d'électrons est choisie de sorte à être identique, à un facteur de proportionnalité près, à une fonction temporelle d'une tension électrique à simuler sur le granulé.

## Revendications

1. Procédé de vérification de la conformité d'un élément isolant donné (1) avec un élément isolant de référence, caractérisé en ce qu'il comprend les étapes de:
- émission (20) d'un faisceau primaire d'électrons (30) sur ledit élément isolant donné (1),
- réception (21) d'un faisceau secondaire d'électrons (31) qui est renvoyé par ledit élément isolant donné (1) en réponse à l'émission du faisceau primaire d'électrons, et
- comparaison (4) d'une courbe temporelle d'intensité électrique dudit faisceau secondaire reçu (31) avec une courbe temporelle d'intensité électrique de référence (G) pour établir s'il y a conformité ou défaut de conformité entre ledit élément isolant donné (1) et un élément isolant de référence.

2. Dispositif pour la mise en oeuvre du procédé conforme à la revendication 1, caractérisé en ce qu'il comprend :
- des moyens (20) pour émettre un faisceau primaire d'électrons (30) sur ledit élément isolant donné (1);
- des moyens (21) pour recevoir un faisceau secondaire d'électrons (31) renvoyé par ledit élément isolant donné (1) en réponse à l'émission du faisceau primaire d'électrons; et
- des moyens (4) pour comparer une courbe temporelle d'intensité électrique dudit faisceau secondaire reçu et une courbe temporelle d'intensité électrique de référence mémorisée (G).

3. Procédé pour trier des granulés de matériau isolant, caractérisé en ce qu'il comprend les étapes de :
- émission (20) d'un faisceau primaire d'électrons (30) sur chacun desdits granulés,
- réception (21) d'un faisceau secondaire d'électrons (31) qui est renvoyé par ledit chacun des granulés en réponse à l'émission du faisceau primaire d'électrons,
- comparaison (4) d'une courbe temporelle d'intensité électrique dudit faisceau secondaire reçu avec une courbe temporelle d'intensité électrique de référence (G) associée à un granulé de référence, et
- éjection (8) dudit chacun des granulés en réponse à un résultat de comparaison négatif entre ladite courbe temporelle d'intensité électrique dudit faisceau secondaire reçu et la courbe temporelle d'intensité électrique de référence associée audit granulé de référence.

4. Procédé conforme à la revendication 3, caractérisé en ce que ladite courbe temporelle d'intensité électrique de référence est une courbe gabarit (G) établie à partir d'une courbe temporelle d'intensité électrique (C) d'un faisceau secondaire d'électrons qui est renvoyé par le granulé de référence en réponse à l'émission d'un faisceau primaire d'électrons sur ledit granulé de référence, et en ce que ladite étape de comparaison consiste en une vérification de l'inscription dans ladite courbe gabarit de ladite courbe temporelle d'intensité électrique dudit faisceau secondaire reçu .

5. Procédé conforme à la revendication 3 ou 4, caractérisé par une fonction temporelle d'intensité électrique dudit faisceau primaire d'électrons (30) qui est identique, à un facteur de proportionnalité près, à une fonction temporelle d'une tension électrique à simuler sur le granulé.

6. Procédé conforme à la revendication 3, 4 ou 5, caractérisé en ce que ladite étape d'émission (20) d'un faisceau primaire d'électrons (30) sur ledit chacun des granulés est précédée par une étape de mise sous vide (50, 51) d'une chambre contenant ledit chacun des granulés.

7. Procédé conforme à l'une quelconque des revendications 3 à 6, caractérisé par un défilement continu des granulés à trier et en ce que ladite émission (20) d'un faisceau primaire d'électrons (30) sur chacun desdits granulés est activée en réponse à la détection, par reconnaissance de forme (7), du passage dudit chacun des granulés.

8. Procédé conforme à l'une quelconque des revendications 3 à 7, caractérisé en ce que lesdits granulés sont des granulés qui sont préalablement lavés en vue de supprimer des contaminations surfaciques.

9. Gaine de câble d'énergie fabriquée à partir de granulés triés selon l'une quelconque des revendications 3 à 8.
